# EUROPEAN PATENT APPLICATION

(11) **EP 4 671 581 A1**
(43) Date of publication of application: **31.12.2025**
(21) Application number: 24184880.3
(22) Date of filing: 27.06.2024
(51) Int. Cl.: F16K 27/00, F16K 27/06

(54) **FLUID CONTROL VALVE**

(71) Applicant: Valeo Autosystemy SP. Z.O.O., 32-050 Skawina (PL)
(72) Inventor: CIZEK, Konrad, 32 050 Skawina (PL); NOWAKOWSKI, Adrian, 32 050 Skawina (PL); GUT, Damian, 32 050 Skawina (PL)
(74) Representative: Valeo Powertrain Systems

(57) **Abstract**

A fluid control valve (100) includes a shell (200) having a plurality of ports (202). Each port (202) is fluidically sealed by blanks (204) integrally formed with the shell (200). A bushel (600) is received inside the shell (200) and adapted to rotate inside the shell (200) to configure fluid communication between the ports (202). The blanks (204) are configured to be selectively removed to accommodate fluid nozzles (300).

## Description

### TECHNICAL FIELD

The present invention relates to a fluid control valve, particularly to a multiway fluid control valve.

### BACKGROUND OF THE INVENTION

Generally, a multiway fluid control valve comprises a rotatable bushel received inside a stationary shell for controlling a flow of a plurality of fluids in a plurality of fluid circuits. The bushel comprises a plurality of sections interacting with different portions of the shell for controlling the flow of the plurality of fluids in the plurality of fluid circuits respectively. The shell comprises a plurality of fluid inlet and outlet openings that are brought in fluid communication with each other based on the angular position of the bushel, particularly, angular position of cut-outs formed on different sections of the bushel received within the corresponding portions of the shell. The plurality of sections of the bushel comprises a plurality of cut-outs that enables fluid communication between the plurality of fluid inlets and outlets based on the angular position of the bushel within the shell, wherein different fluid is selectively supplied in the plurality of fluid circuits based on the angular position of the bushel within the shell. However, the design of such a multiway fluid control valve provides application specific in terms of number of circuits it can connect. Such configuration of the multi-way valve lacks flexibility to adapt and to cater to different fluid circuits. Thus, a particular multiway fluid control valve made for a first plurality of fluid circuits cannot be adapted for a second plurality of fluid circuits. Moreover, different applications require different number of inlet and outlets, where the facing directions of the inputs and outputs are critical due to packaging constraints. As a result, altogether different multiway fluid control valves has to be designed for every application.

### OBJECT OF THE INVENTION

An object of the invention is to adapt a multiway fluid control valve to be used with plurality of fluid circuits in multiple applications without the need to change the design of the multiway fluid control valve to accommodate such adaptability.

Yet another objective of the invention is to increase the number of fluid circuits that can be simultaneously controlled to handle more complex arrangements without requiring any design changes.

### SUMMARY OF THE INVENTION

The invention relates to a fluid control valve. The fluid control valve includes a shell that includes a plurality of ports. Each port is fluidically sealed by blanks formed with the shell. A bushel is received inside the shell and adapted to rotate inside the shell to configure fluid communication between the ports. The fluid control valve further includes at least one nozzle. Particularly, the at least one nozzle is adapted to be attached to the shell. The at least one of the blanks is adapted to be selectively detached with respect to the shell to accommodate the at least one fluid nozzle.

Generally, the shell of the fluid control valve comprises at least one front end face and a rear end face spaced longitudinally opposite to each other, and a plurality of lateral faces connecting the front end face and the rear end face.

Particularly, the blanks are integrally formed with the shell.

Generally, a cover is adapted to be mounted to at least one of the front end face and the rear end face, of the shell using at least one fastener.

Particularly, the shell of the fluid control valve has at least three lateral faces, notably at least six lateral faces.

Specifically, the port and the blanks are disposed on the lateral faces of the shell of the fluid control valve.

More specifically, the detachment of at least one of the blanks is effected or carried out by the attachment motion of the nozzle to the shell.

Generally, at least two blanks are removed to create at least one inlet port and at least one outlet port to accommodate at least one inlet nozzle and one outlet nozzle.

Particularly, the shell comprises an internal cavity housing the bushel. The bushel comprises at least a one guiding means configured to allow fluidic communication between at least two ports.

Specifically, the bushel is adapted to be rotated to change the ports that it fluidically connects.

Generally, a plurality of the fluid control valves are assembled to form a multiway fluid control valve. The corresponding shells, of the plurality of fluid control valves, are configured to be assembled to each other in different orientations with respect to each other. Further, the corresponding bushels of the plurality of fluid control valves are adapted to be assembled to each other in different orientations with respect to each other.

Particularly, the plurality of shells of the multiway fluid control valve are disposed between the covers. Particularly, the plurality of shells are connected to each other, to the cover, and to the cover using the fasteners.

Specifically, in the multiway fluid control valve, at least one of the plurality of shells is adapted to be connected to an adjacent one of the plurality of shells, in different angular orientations

More specifically, in the multiway fluid control valve, at least one of the cover and the cover is integrally formed with at least one of the plurality of shells.

More specifically, in the multiway control valve, each bushel includes a corresponding first connection portion and a corresponding second connection portion adapted to configure mechanical connection, notably fluidic connection, between the adjacent bushels.

Generally, for the multiway control valve, the adjacent bushels are housed in adjacent shells. Adjacent bushels of adjacent shells are rotationally coupled together using the first connection portion of one bushel and the second connection portion of the adjacent bushel.

### BRIEF DESCRIPTION OF DRAWINGS

FIG. 1 illustrates a schematic representation depicting a fluid control valve in accordance with an embodiment of the present invention.
FIG. 2 illustrates an exploded view depicting elements of the fluid control valve of FIG. 1.
FIG 3 illustrates an isometric view of a shell of the fluid control valve of FIG. 1, with a plurality of ports that are all fluidically sealed by a plurality of blanks.
FIG. 4 illustrates a sectional view of the shell of FIG. 3 along a section line AA' depicted in FIG 3.
FIG 5 illustrates an isometric view of the shell of FIG. 3, with a plurality of blanks removed.
FIG. 6 illustrates a sectional view of the shell of FIG. 5 along a section line BB' depicted in FIG 5.
FIG 7 illustrates an isometric view of the shell of FIG. 5, with a plurality of fluid nozzles attached, specifically an inlet nozzle and an outlet nozzle.
FIG. 8 illustrates a sectional view of the shell of FIG. 7 along a section line CC' depicted in FIG 7.
FIG. 9A illustrates a front perspective view of a bushel.
Figure 9B illustrates a sectional view of the bushel of FIG. 9A along a section line DD' depicted in FIG. 9A.
FIG. 10A illustrates a back perspective view of the bushel depicted in FIG. 9A.
Figure 10B illustrates a sectional view of the bushel along a section line EE' depicted in FIG. 10A.
FIG. 11 illustrates a perspective view of a multiway fluid control valve formed by assembling a plurality of the fluid control valves of FIG. 1.
FIG. 12 illustrates an exploded view depicting elements of the multiway fluid control valve of FIG. 11.

### DETAILED DESCRIPTION

It must be noted that the accompanying figures disclose the invention in a detailed enough way to be implemented, said figures helping to better define the invention, if need be. The invention should, however, not be limited to the embodiments disclosed in the description.

The present invention envisages a fluid control valve that is configured to supply coolant fluid to multiple coolant circuits. Conventional fluid control valves are restricted by design and can be utilized to cater to the requirement of a specific environment. For example, due to packaging requirements, if the direction of fluid inlet and fluid outlet needs to change depending on the application environment, the whole valve needed to be redesigned. Thus there present invention solves this issue by following a modular approach as will be discussed below.

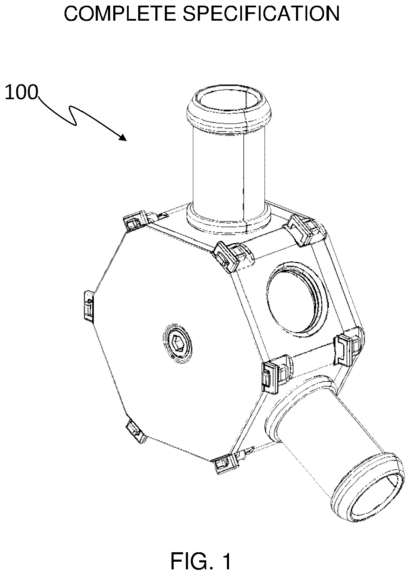

FIG. 1 illustrates a fluid control valve 100 in accordance with an embodiment of the present invention.

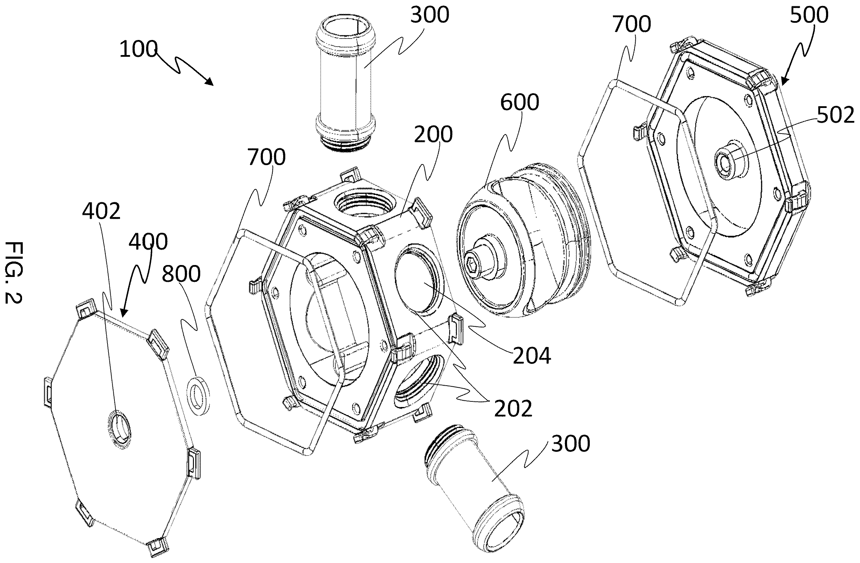

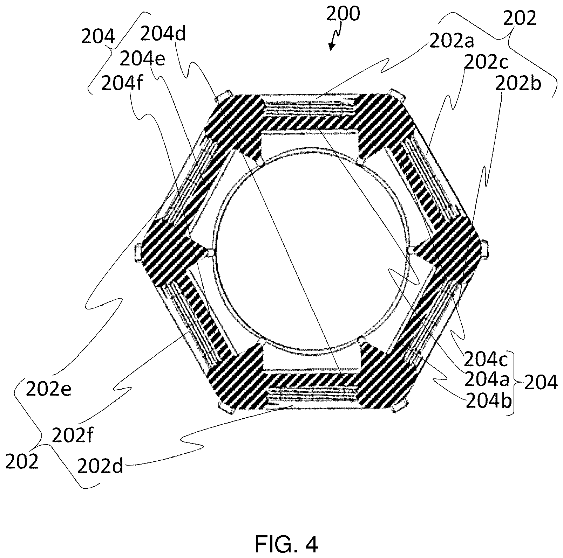

FIG. 2 illustrates an exploded view depicting elements of the fluid control valve 100, according to a preferred embodiment of the present invention. As depicted in the FIG.2, the fluid control valve 100 includes a shell 200. The shell comprises a plurality of ports 202 that are fluidically sealed by blanks 204, notably blanks 204 integrally formed with the shell 200. By way of example, the shell 200 is formed along with the blanks 204 during the manufacturing of the shell, such as using casting, injection molding, or the like. The blanks 204 are adapted to be removed from the ports 202. By way of example, the ports 202 may be punched out using a punching tool. Further, by way of example, the blanks 204 comprise weakened sections at the peripheral edges where it joins with the shell 200, to facilitate easy removal of the blanks 204. The fluid control valve 100 further includes a least one nozzle 300. In one embodiment, the fluid control valve 100 includes two nozzles 300. The nozzles 300 are configured to convey fluid in to or out of the shell 200. The nozzle 300 is separated from the shell and is not an integrated part of the shell 200. In order to attach the nozzle 300 to the shell 200, a blank 204 is removed, for example by punching out the blank 204 to accommodate the nozzle 300. Each and any of the blanks 204 can be selectively removed to open the respective port 202 allowing the fluid nozzle 300 to be accommodated in the port 202. Further, removing the blank 204 opens up fluidic communication through that port 202. A bushel 600 received inside the shell 200 is adapted to rotate inside the shell 200 to configure fluidic communication between the ports 202. The bushel 600 can freely rotate about a longitudinal axis of the bushel 600 inside the shell 200, which enables the bushel 600 to be easily positioned at any angular orientation. It must be understood that at least two ports 202 are fluidically connected to configure such a fluidic communication. Particularly, at least one port acts as an inlet port 202a and at least another port acts as an outlet port 202b (shown in FIG. 4). To achieve this, at least two blanks 204, such as 204a and 204b are removed to create at least one inlet port 202a and at least one outlet port 202b that accommodates at least one inlet nozzle 300a and one outlet nozzle 300b.

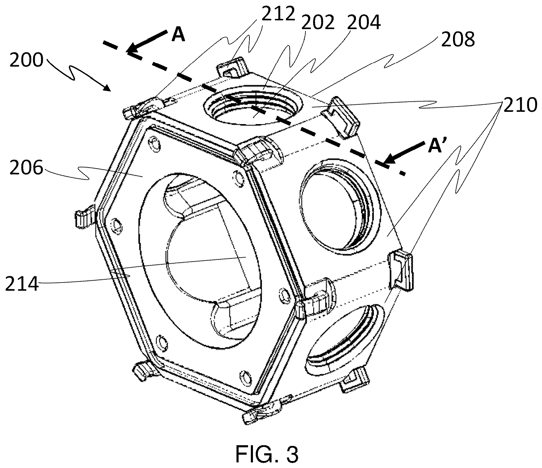

In an embodiment, the blank 204 is not required to be removed in a dedicated step, rather, the removal of the blank 204 is carried out by the attachment motion of the nozzle 300 to the shell 200. For example, the nozzle 300 may be connected to the shell by a threaded connection. So, when the nozzle is screwed in to the shell, the progressive translation motion of the nozzle 300 pushes the blank 204 to fracture the blank 204 along its periphery where it is connected to the shell 200. As stated earlier, by way of example, the blank 204 may comprise weakened sections at the peripheral edges where it joins with the shell 200, to facilitate easy removal of the blank 204. To further facilitate the leading edge of the nozzle that comes in contact with the blank 204 may be provided with a pointed shape (knife edge shaped) in order to provide a concentrated force to aid the failure of the blank 204 at the peripheral edge. The removal of the blank 204 using the nozzle removes the assembly step of separately punching out the blank 204, thus saving on assembly time and associated costs. It should be noted that the removal step of the blank 204 must be performed before the installation of the bushel 600 inside an internal cavity 214 (shown in FIG. 3) of the shell 200.

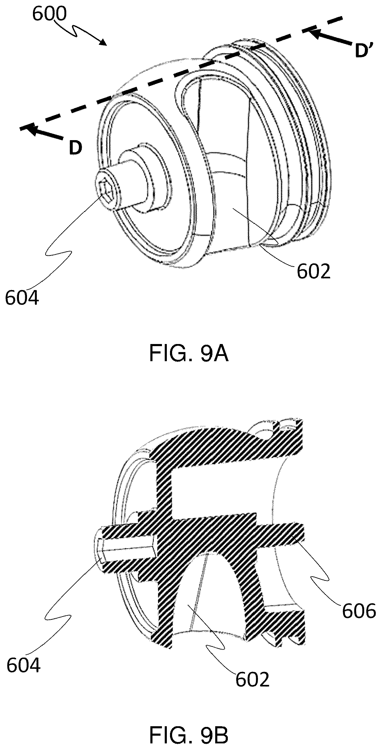

The bushel 600 is housed in the internal cavity 214 (shown in FIG. 3) of the shell 200, and comprises a guiding means 602 (shown in FIG. 9A) that allows the fluidic communication between at least two ports 202, particularly at least one inlet port 202a and at least one outlet port 202b. Rotating the bushel 600 changes the ports 202 that it fluidically connects. Specifically, when the bushel 600 is rotated, the guiding means 602 of the bushel 600 is rotated to a different angular position fluidically connecting a different set of ports 202 than before. Thus, the fluid control valve 100 can be provided with multiple inlet-outlet combinations.

The fluid control valve 100 further includes a cover 400, a cover 500 and a plurality of gaskets 700. The shell includes a front end face 206 and a rear end face 208 (shown in FIG. 3). Cover 400 or cover 500 is adapted to be mounted to at least one of the front end face 206 and the rear end face 208 of the shell 200 using at least one fastener 212. This can imply any one of the three embodiments:
- the cover 400 and the cover 500 are adapted to be mounted to the front end face 206 and the rear end face 208, respectively;
- only the cover 400 is adapted to be mounted to the front end face 206;
- only the cover 500 is adapted to be mounted to the rear end face 208.

In an embodiment, the cover 400 is mounted on and abuts the front end face 206 and the cover 500 is mounted on and abuts the rear end face 208 of the shell 200. A gasket 700 is disposed at the interface between the cover 400 and the front end face 206, and at the interface between the cover 500 and the rear end face 208, to provide a fluidic sealing. The cover 400 and the cover 500 are connected to the shell 200 using at least one fastener 212 (shown in FIG. 3). By way of example and not limitation, the fasteners 212 can be of any suitable type such as snap fit fasteners, threaded fasteners (nuts and bolts, screws, or the like), rivets, clamps, or the like.

In such an exemplary case, a cantilever snap-fit connection may be employed for facilitating quick connection and disconnection as required. Such a fastener 212 may include a male and a female portion. The male portion of the fastener 212 may be disposed on the lateral faces 210 of the shell 200 near the front end face 206 and the female portion of the fastener 212 may be disposed on the lateral faces 210 near the rear end face 206, or vice versa. Alternatively, either only the male portion or only the female portion of the fastener 212 may be disposed near both the front end face 206 and the rear end face 208. Accordingly, the cover 400 and the cover 500 have the complementary portion (male or female) of the fastener 212 as that of the portion of the fastener 212 disposed near the front end face 206 and the rear end face 208 of the shell 200, respectively. It must be noted that any combination of the fastener 212 portions are possible without departing from the scope of the invention. Similarly, the same is true for other types of fastener s such as threaded connections (using bolts/screws), clamps, or the like.

In another embodiment, only the cover 400 is adapted to be mounted to the front end face 206. In such a case, the cover 500 is integrally formed with the shell 200 as a single piece. This facilitates easier and faster assembly process since the cover 500 does not need to be assembled separately to the shell 200. Other arrangements of the gaskets 700 and the fasteners 212 will remain same as that of the previous embodiment. However, it should be noted that gasket 700 will not be required for the cover 500 since it is integrally formed with the shell 200 as a single piece.

In another embodiment, only the cover 500 is adapted to be mounted to the front end face 208. In such a case, the cover 400 is integrally formed with the shell 200 as a single piece. This facilitates easier and faster assembly process since the cover 400 does not need to be separately assembled to the shell 200. Other arrangements of the gaskets 700 and the fasteners 212 will remain same as that of the previous embodiment. However, it should be noted that gasket 700 will not be required for the cover 400 since it is integrally formed with the shell 200 as a single piece.

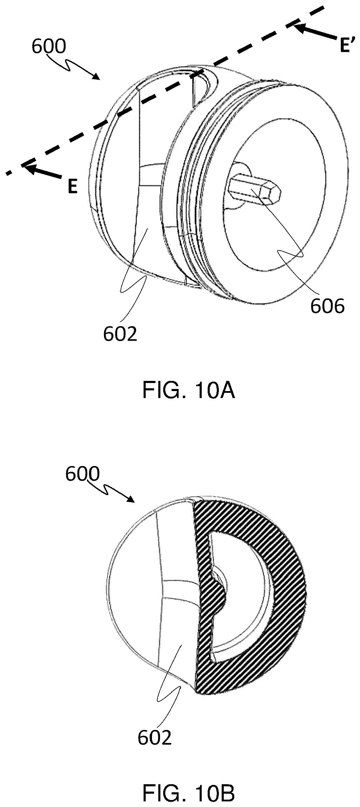

The cover 400 includes a substantially centrally located aperture 402. A first connection portion 604 (shown in FIG. 9A) of the bushel 600 passes through the aperture 402 and is supported in the inner wall of the aperture 402. An annular shaped seal 800 is disposed inside the shell 200 abutting the inner surface of the cover 400 and concentric with aperture 402. The seal 800 is disposed around the first connection portion 604 of the bushel 600 and prevents leakage of fluid out of the shell 200 through the aperture 402. The cover 500 includes a receptacle 502 that supports the bushel 600. Specifically, the receptacle 502 supports a second connection portion 606 (shown in FIG. 10A) of the bushel 600.

FIG. 3 illustrates an isometric view of the shell 200 of the fluid control valve 100 of FIG. 1. The figure shows a plurality of ports 202 that are all fluidically sealed by a plurality of blanks 204. The shell 200 includes at least one front end face 206 and at least one rear end face 208 spaced longitudinally opposite to each other, and a plurality of lateral faces 210 connecting the front end face 206 and the rear end face 208. The shell further includes an internal cavity 214 housing the bushel 600.

In the preferred embodiment, the ports 202 and the blanks 204 are present on the lateral faces 210.

In an embodiment, the shell 200 has at least three lateral faces 210.

In another embodiment, the shell 200 has at least six lateral faces 210.

FIG. 4 illustrates a sectional view of a shell 200 along a section line AA'. The figure shows the shell 200 having a plurality of ports 202, particularly 202a, 202b, 202c, 202d, 202e, and 202f being fluidically sealed by a plurality of blanks 204, particularly 204a, 204b, 204c, 204d, 204e, and 204f. As shown by the shaded portion, the blanks 204 are integrally formed with the shell 200.

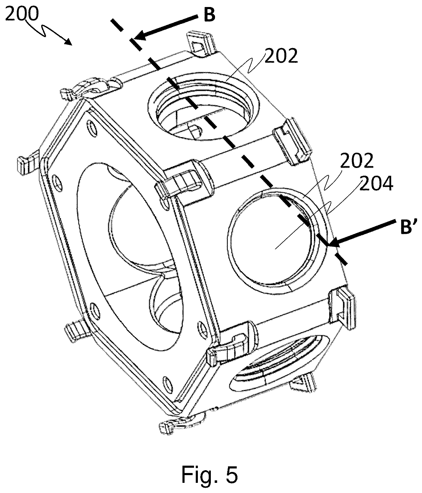

FIG. 5 illustrates an isometric view, similar to that of FIG.3, of the shell 200 of the fluid control valve 100 of FIG. 1. The figure shows some of the plurality of ports 202 that are fluidically sealed by a plurality of blanks 204, while some of the blanks 204 have been removed to make fluid passage.

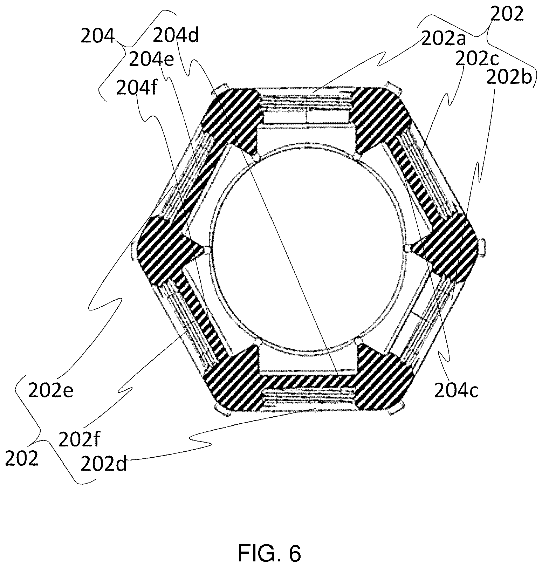

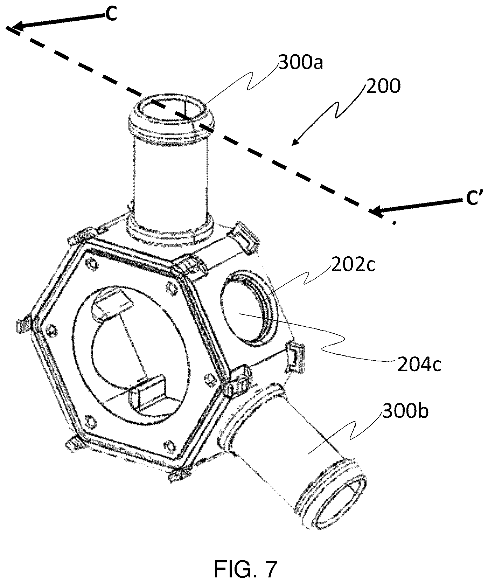

FIG. 6 illustrates a sectional view of a shell 200 along a section line BB'. The figure shows the shell 200 having a plurality of ports 202, particularly 202a, 202b, 202c, 202d, 202e, and 202f. Here the ports 202c, 202d, 202e, and 202f are fluidically sealed by a plurality of blanks 204, particularly 204c, 204d, 204e, and 204f, while the blanks 204a and 204b have been removed/ punched out to open the fluidic seal ports 202a and 202b, thus accommodating fluid nozzles 300 and allowing fluidic communication therethrough. This is further illustrated in FIG. 7, wherein fluid nozzles 300a and 300b are fitted to the shell 200.

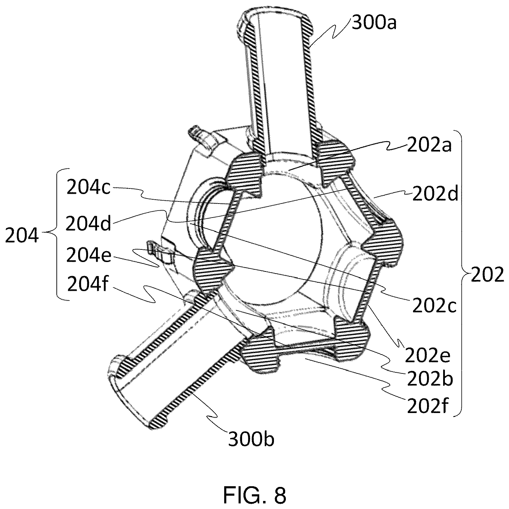

FIG. 8 illustrates a sectional view of a shell 200 along a section line CC'. The figure shows the shell 200 wherein the blanks 204a and 204b have been removed to open the ports 202a and 202b to accommodate an inlet nozzle 300a and an outlet nozzle 300b. This configures the shell 200 to receive/deliver fluid through the ports 202a and 202b via the connected fluid nozzles 300a and 300b. It is understood that at least two ports 202 should be opened by removing the respective blanks 204 so that one of the open ports acts as an inlet and the other as outlet. It is further implied that any two or more blanks 204 may be removed to create open ports for allowing fluidic communication.

In an embodiment, more than two blanks 204 may be removed and accordingly, more than two fluid nozzles 300 may be connected, without departing from the scope of the invention. This will allow to possibility of operating more than one fluid circuits and improve versatility.

It should be noted that the present solution provides a flexible solution for a fluid control valve, since any of the blanks 204 can be selectively removed, according to the area of application, their packaging and arrangement constraints. The shape of the guiding means 602 of the bushel 600 is suitably shaped to connect the desired two or more ports 202 to achieve the desired combinations (relative angular position) of inlet and outlet ports. The structure of the bushel 600 will be discussed in further detail in the description of FIG 9A, FIG 9B, FIG 10A and FIG 10B.

In an embodiment, fluid seals (not shown) are disposed at the interface between the fluid nozzles 300 and the port 202 of the shell 200 to provide leak proof connection therebetween.

FIG. 9A and FIG. 10A illustrates a front perspective view and a rear perspective view, respectively, of the bushel 600. FIG, 9B and FIG. 10B illustrate sectional views of the bushel 600 along a section lines DD' and EE' as shown in FIG. 9A and FIG. 10A, respectively. The bushel 600 has a substantially circular sectional profile and includes a guiding means 602. The guiding means 602 is specifically shaped notch in the bushel. The guiding means 602 is shaped so as to connect at least two ports 202. Fig. 10B more clearly illustrates the profile of the guiding means 602.

By way of example, the bushel 600 may be rotated such that the guiding means 602 connects the ports 202a and 202b. Thus, when fluid enters the shell 200 through the inlet nozzle 300a, the fluid passes through the port 202a and is guided by the guiding means 602 to the port 202b, and then the fluid passes through the port 202b and exits the shell 200 through the outlet 300b. It must be understood, similar effect is achieved if the inlet and outlet is swapped. Similarly, any combination of ports 202 can be implemented for inlet and outlet of fluid depending on the specific packaging requirements of the application where the fluid control valve is used. For example, different vehicles may have different arrangement of components disposed is proximity of the fluid control valve. Further, the direction in which the fluid source and the fluid destinations are arranged with respect to the fluid control valve, may be different for different applications (or different vehicles). Thus, the current invention acts as a versatile solution for different applications. Depending on the application and requirement, at least any two blanks 204 can be removed to open suitable ports 202 for fluid communication. Depending on the ports 202 that are to be fluidically connected, a bushel with a suitably shaped guiding means 602 is selected.

In another embodiment, the bushel 600 may include guiding means 602 to connect three or more ports 202. Thus, such a bushel enables multiple inlet and multiple outlet options.

The bushel 600 includes a first connection portion 604 and a second connection portion 606. The first connection portion 604 has a non-circular internal recess whose shape corresponds to the external cross section of the second connection portion 606. By way of example and not limitation, the recess can be a hexagonal recess and the second connection portion 606 has a hexagonal outer profile such that it can be inserted into the recess of the first connection portion 604. The second connection portion 606 can be rotationally coupled to the recess of the first connection portion 604. The recess of the first connection portion 604 is also used to rotate the bushel 600 (using a suitable tool) to change the ports 202 that the bushel 600 connects.

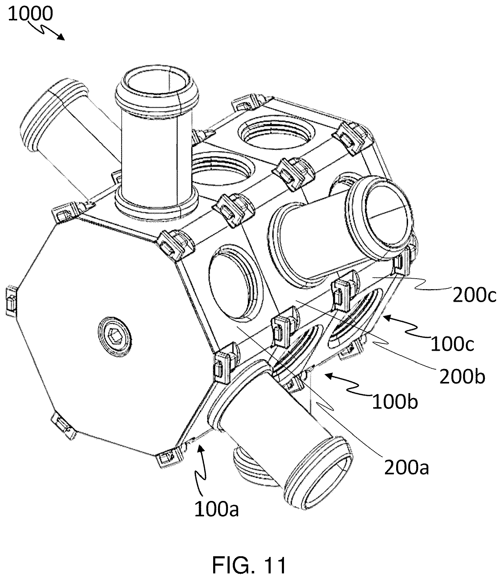

FIG. 11 illustrates another embodiment of the present invention wherein a plurality of the fluid control valves 100a, 100b, 100c are assembled end to end to form a multiway fluid control valve 1000.

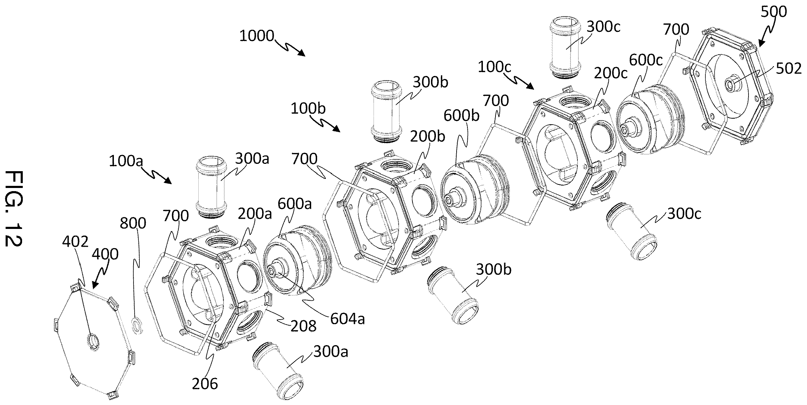

FIG. 12 illustrates an exploded view depicting elements of the multiway fluid control valve 1000 of FIG. 11. A plurality of the fluid control valves 100a, 100b, 100c include corresponding shells 200a, 200b, 200c. The shells 200a, 200b, 200c are identical to the shell 200 as illustrated in FIG. 3 and FIG. 4. Each of the shells 200a, 200b, 200c has a front end face 206 and a rear end face 208. A plurality of such shells 200a, 200b, 200c are adapted to be assembled to each other. The corresponding bushels 600a, 600b, 600c of the plurality of fluid control valves 100a, 100b, 100c are adapted to be assembled to each other in different orientations with respect to each other.

Similar to the fluid control valve 100, the multiway fluid control valve 1000 also includes at least a cover 400, at least a cover 500 and a plurality of gaskets 700. More specifically, the plurality of shells 200a, 200b, 200c are disposed between the cover 400 and the cover 500, and the plurality of shells 200 are connected to each other and also connected to the cover 400, and to the cover 500 using the fasteners 212. One gasket 700 is disposed at the interface between of each pair of shells 2000a, 200b, 200c, such as between shell 200a and 200b, and between shell 200b and 200c. Similarly, if more shells are attached in series, gasket 700 is disposed between each pair of shells for fluidic seal. Similarly, gasket 700 is disposed at the interface between the cover 400 and the front end face 206 of the shell 200a, and at the interface between the cover 500 and the rear end face 208 of the shell 200c, to provide a fluidic sealing. Without limitation, it must be understood, that the shells 200a and 200c merely denote the shells at the extreme ends (i.e. the first and the last shell) and does not limit the scope to three shells alone. The cover 400 and the cover 500 are connected to the shell 200a and 200c, respectively using at least one fastener 212 which may be of any suitable type such as snap fit fasteners, threaded fasteners (nuts and bolts, screws, or the like), rivets, clamps, or the like. For example, a cantilever snap-fit connection may be employed for facilitating quick connection and disconnection as required. As stated earlier, the shells 200a, 200b and 200c, and the cover 400 and the cover 500 may have any combination of the male and female portions of the fastener 212, provided that adjacent parts have the opposite male/female portion of the fastener 212.

Further, each of the plurality of shells 200a, 200b, 200c are adapted to be connected to an adjacent shells 200a, 200b, 200c in different angular orientations. The shells can be disconnected from each other as required, even after the assembly of the nozzles 300, and assembled at a different angular orientation, if the current configuration is not suitable for efficient packaging and design requirements. Thus, further flexibility is provided in terms of changing/customizing the directions of the inlet and outlet nozzles 300 for one or more of the shells 200 for catering to different applications having different layouts of other components in the proximity.

Each bushel 600a, 600b, 600c of the multiway fluid control valve 1000 comprises a corresponding first connection portion 604a, 604b, 604c (similar to the first connection portion 604 as illustrated in FIG. 9A) and a corresponding second connection portion 606a, 606b, 606c (not shown, but similar to the first connection portion 606 as illustrated in FIG. 10A) adapted to configure mechanical connection between the adjacent bushels 600a, 600b, 600c housed in adjacent shells 200a, 200b, 200c. Particularly, a first connection portion of one bushel is mechanically coupled to the second connection portion of the adjacent bushel. For example, the second connection portion 606a of the bushel 600a is configured to mechanically couple with the first connection portion 604a of the adjacent bushel 600b to rotationally couple the bushel 600a and 600b. Without limitation, any suitable shape of the first connection portion 604 and the recess in the second connection portion 606 may be implemented for rotationally coupling them such as a hexagonal shape, square shape, polygonal shape or the like. Further, other suitable connections such as keyed shaft connection, splined connection, dog clutch connection or the like may be used without departing from the scope of the invention.

Similar to the fluid control valve 100, the cover 400 of the multiway fluid control valve 1000 also includes a substantially centrally located aperture 402 to accommodate the first connection portion 604a of the bushel 600a passes through the aperture 402 and is supported in the inner wall of the aperture 402. Further, the cover 500 includes a receptacle 502 that supports the bushel 600c. Specifically, the receptacle 502 supports a second connection portion 606c of the bushel 600. An annular shaped seal 800 is disposed inside the shell 200 abutting the inner surface of the cover 400 and concentric with aperture 402. The seal 800 is disposed around the first connection portion 604 of the bushel 600 and prevents leakage of fluid out of the shell 200 through the aperture 402.

In an embodiment of the multiway fluid control valve 1000, at least one of the cover 400 and the cover 500 is integrally formed with at least one of the plurality of shells 200. Particularly, the cover 400 may be integrally formed along with the shell 200a, while the cover 500 may be integrally formed along with the shell 200c, in which case the use of gasket 700 may be optional. An integrally formed cover saves time and efforts of assembling the cover to the shell.

Similar to the fluid control valve 100, the shells 200a, 200b, 200c of the multiway fluid control valve 1000 have a plurality of ports that can be opened by removing a desired combination of blanks fluid for accommodating fluid nozzles 300a, 300b, 300c for enabling fluid communication with the interior of the shell. The main advantage of stacking multiple fluid control valve 100 in to a multiway fluid control valve 1000 is to enable flexibility of the direction of inflow into and outflow from the shells. As a result design freedom and packaging efficiency is improved.

It must be noted that, while describing the components of the multiway fluid control valve 1000, wherever the reference numerals 100; 200; 300; 600 occur, they mean any of the parts denoted by the parts denoted by 100a, 100b, 100c; 200a, 200b, 200c ; 300a, 300b, 300c; 600a, 600b, 600c respectively.

The above specifications encompass exemplary implementations of the invention. Persons having ordinary skill in the art will recognize certain modifications, permutations, additions and sub-combinations therefore. It is therefore intended that the following appended claims hereinafter introduced are interpreted to include all such modifications, permutations, additions and sub-combinations are within their true spirit and scope.

## Claims

1. A fluid control valve (100) comprising:
• a shell (200) comprising a plurality of ports (202), each port (202) being fluidically sealed by blank (204) formed with the shell (200);
• a bushel (600) received inside the shell (200) and adapted to rotate inside the shell (200) to configure fluid communication between the ports (202);
• at least one nozzle (300);
**characterized in that**, the at least one nozzle (300) is configured to be attached to the shell (200) and the at least one blank (204) is configured to be selectively detached with respect to the shell (200) to accommodate the at least one nozzle (300).

2. The fluid control valve (100) as claimed in the previous claim, wherein the shell (200) comprises at least one front end face (206) and a rear end face (208) spaced longitudinally opposite to each other, and a plurality of lateral faces (210) connecting the front end face (206) and the rear end face (208).

3. The fluid control valve (100) as claimed in the previous claim, wherein a cover (400,500) is adapted to be mounted to at least one of the front end face (206) and the rear end face (208), of the shell (200) using at least one fastener (212).

4. The fluid control valve (100) as claimed in the previous claim, wherein the shell (200) has at least three lateral faces (210).

5. The fluid control valve (100) as claimed in claim 2, wherein the port (202) and the blanks (204) are disposed on the lateral faces (210) of the shell (200).

6. The fluid control valve (100) as claimed in any of the preceding claims, wherein at least two blanks (204) are removed to create at least one inlet port (202a) and at least one outlet port (202b) to accommodate at least one inlet nozzle (300a) and one outlet nozzle (300b).

7. The fluid control valve (100) as claimed in any of the preceding claims, wherein detachment of at least one of the blanks (204) is carried out by the attachment motion of the nozzle (300) to the shell (200).
The fluid control valve (100) as claimed in any of the preceding claims, wherein the shell (200) comprises an internal cavity (214) housing the bushel (600), the bushel (600) comprising at least one guiding means (602) configured to allow fluidic communication between at least two ports (202).

9. The fluid control valve (100) as claimed in the previous claim, wherein the bushel (600) is configured to be rotated to change the ports (202) that it fluidically connects.

10. A multiway fluid control valve (1000) formed by assembling a plurality of the fluid control valves (100, 100a, 100b, 100c) according to any one of the previous claims, wherein corresponding shells (200a, 200b, 200c) of the plurality of fluid control valves (100a, 100b, 100c) are configured to be assembled to each other, and the corresponding bushels (600a, 600b, 600c) of the plurality of fluid control valves (100a, 100b, 100c) are adapted to be assembled to each other in different orientations with respect to each other.

11. The multiway fluid control valve (1000) as claimed in the previous claim in combination with claim 3, wherein the plurality of shells (200a, 200b, 200c) are disposed between the covers (400, 500), and the plurality of shells (200) are connected to each other, and to the covers (400, 500), using the fasteners (212).

12. The multiway fluid control valve (1000) as claimed in claim 10 or claim 11, wherein at least one of the plurality of shells (200a, 200b, 200c) is adapted to be connected to an adjacent one of the plurality of shells (200a, 200b, 200c) in different angular orientations.

13. The multiway fluid control valve (1000) as claimed in any one of claims 10 to 12, wherein each bushel (600a, 600b, 600c) comprises a corresponding first connection portion (604a, 604b, 604c) and a corresponding second connection portion (606a, 606b, 606c) adapted to configure mechanical connection between the adjacent bushels (600a, 600b, 600c).

14. The multiway fluid control valve (1000) as claimed in the previous claim, wherein adjacent bushels (600a, 600b, 600c) are housed in adjacent shells (200a, 200b, 200c), and are rotationally coupled together using the first connection portion (604) of one bushel (600a, 600b, 600c) and the second connection portion (606) of the adjacent bushel (600a, 600b, 600c).
